# EUROPÄISCHE PATENTSCHRIFT

(11) **EP 3 724 009 B1**
(45) Veröffentlichungstag und Bekanntmachung des Hinweises auf die Patenterteilung: **29.09.2021**
(21) Anmeldenummer: 18800860.1
(22) Anmeldetag: 06.12.2018
(51) Int. Cl.: B60C 11/16

(54) **FAHRZEUGLUFTREIFEN MIT EINEM LAUFSTREIFEN MIT SPIKES**
PNEUMATIC VEHICLE TYRE HAVING A TREAD WITH SPIKES
PNEUMATIQUE DE VÉHICULE ÉQUIPÉE D'UNE BANDE DE ROULEMENT POURVUE DE CRAMPONS

(30) Priorität: 14.12.2017 DE 102017222759
(43) Veröffentlichungstag der Anmeldung: 21.10.2020
(73) Patentinhaber: Continental Reifen Deutschland GmbH, 30165 Hannover (DE)
(72) Erfinder: SPECHTMEYER, Torben, 30451 Hannover (DE); SCHLITTENHARD, Jan, 30900 Wedemark (DE); KÖTTER, Maik, 30451 Hannover (DE)
(74) Vertreter: Continental Corporation
(86) Internationale Anmeldenummer: PCT/EP2018/077980
(87) Internationale Veröffentlichungsnummer: WO 2019/115054

(56) Entgegenhaltungen:
- EP-A1- 1 199 193
- EP-A1- 3 208 115

## Beschreibung

Die Erfindung betrifft einen Fahrzeugluftreifen mit einem Laufstreifen, welcher zwei Schulterbereiche und zwischen diesen Schulterbereichen einen mittleren Laufstreifenbereich aufweist, wobei in den Profilpositiven des Laufstreifens Spikes angeordnet sind, welche in Spikespuren über den Umfang des Laufstreifens umlaufen und wobei die Spikespuren Spikezonen zugeordnet sind, welche ebenfalls über den Umfang des Laufstreifens umlaufen, wobei in jeder Spikezone wenigstens eine Spikespur angeordnet ist, wobei ein Spike einen Spikepin mit einem die Laufstreifenoberfläche überragenden Endabschnitt aufweist, wobei dieser Endabschnitt in Draufsicht auf den Laufstreifen unrund und länglich ausgebildet ist und in einer größten Erstreckung eine Längsachse definiert, wobei im mittleren Laufstreifenbereich eine Basis-Spikezone mit einem Spike positioniert ist, dessen Längsachse des Endabschnittes des Spikepins einen Winkel α von 0° bis +/- 7° zur axialen Richtung einnimmt und wobei die Basis-Spikezone oder die Basis-Spikespur den Laufstreifen in eine rechte Laufstreifenhälfte und in eine linke Laufstreifenhälfte teilt.

Es ist bekannt, die Lauffläche von Fahrzeugluftreifen mit Spikes zu bestücken, um eine verbesserte Bodenhaftung auf winterlich verschneiter oder vereister Fahrbahn zu erreichen.

Spikes werden üblicherweise durch eine Kombination aus Formschluss und Klemmung in den Spikelöchern des Laufstreifens von Fahrzeugluftreifen gehalten. Herkömmliche Spikes bestehen üblicherweise aus einem Spikekörper, in welchem der Spikepin mit seinem über die Laufstreifenoberfläche vorstehenden Endabschnitt gehalten ist.

Die verbesserte Bodenhaftung wird dadurch erreicht, dass der Endabschnitt des Spikepins während des Rollens des Reifens in die winterliche Fahrbahnschicht eindringt und zu einer mechanischen Verbindung zwischen Reifen und Fahrbahn führt.

Aus der US 6374886 ist es bekannt, einen Fahrzeugluftreifen mit Lamellenstiften auszurüsten. Mit Hilfe von Richtung und Ausbildung der Lamellenstifte sind die Haftungseigenschaften des Reifens in Längs- und Querrichtung zu beeinflussen.

Aus der EP 1199193 A1 ist ein Spike bekannt, welcher in Draufsicht eine unrunde, längliche Spikewurzel und ein unrundes, längliches Spikeoberteil aufweist, wobei die Spikewurzel und das Spikeoberteil gegeneinander verschränkt sind, sodass die Längsachse der Spike-Wurzel mit der Längsachse des Spike-Oberteils einen von Null abweichenden Winkel einschließt. Weiterhin ist es bekannt, dass unterschiedliche Spiketypen im Laufstreifen angeordnet sind, die sich durch den Verschränkungswinkel unterscheiden. Für eine optimale Kraftaufnahme sind die Spikes derart im Laufstreifen angeordnet, dass in der linken Reifenschulter die Längsachsen nach rechts und in der rechten Reifenschulter nach links aus der axialen Richtung in gleichen Winkeln herausgedreht sind. Im mittleren Laufstreifenbereich sind die Längsachsen des Spikeoberteils etwa axial ausgerichtet.

Es ist zudem bekannt, dass der Schulterbereich des Laufstreifens besonders bei Kurvenfahrt seitliche bzw. quer gerichtete Kräfte aufnimmt und zur Seitenführung des Reifens maßgeblich beiträgt. Weiterhin ist es bekannt, dass parallel zur axialen Richtung des Reifens angeordnete längliche Endabschnitte von Spikes vorteilhaft für die Traktion sind.

Der Erfindung liegt die Aufgabe zugrunde, einen Fahrzeugluftreifen der eingangs genannten Art derart zu gestalten, dass seine Performance auf winterlicher Fahrbahn verbessert ist und der Zielkonflikt zwischen Übertragung von Traktionskraft und Seitenführungskraft auf einem höheren Niveau gelöst ist.

Gelöst wird die gestellte Aufgabe erfindungsgemäß dadurch, dass in einer Laufstreifenhälfte wenigstens 2 weitere Spikezonen mit Spikes zusätzlich zu der Basis-Spikezone angeordnet sind, deren Längsachsen der Endabschnitte der Spikepins je größere Winkel zur axialen Richtung einnehmen, je weiter axial außen die Spikezone des Spikes positioniert ist und dass die Längsachsen der Endabschnitte der Spikepins der in diesen weiteren Spikezonen positionierten Spikes Winkel β, γ, δ in einem Bereich von +/- 5° bis +/- 90° in Bezug zur axialen Richtung einnehmen.

Erfindungswesentlich ist, dass eine "Auffächerung" der Winkelgröße der Spikepins der in den weiteren Spikezonen angeordneten Spikes von einer in dem mittleren Laufstreifenbereich angeordneten Basis-Spikezone in Richtung Laufstreifenschulter erhalten ist. Dies bedeutet, dass die Längsachsen der Endabschnitte der Spikepins größere Winkel in Bezug auf die axiale Richtung einnehmen, je weiter der Spike in einer weiter axial außen angeordneten weiteren Spikezone positioniert ist. Es ist in der Laufstreifenmitte wenigstens eine Basis-Spikezone mit einem etwa quer zur Umfangsrichtung angeordneten Spikepin-Endabschnitt angeordnet, durch welchen Traktionskräfte optimal übertragen werden können. Je weiter axial außen ein Spike in einer der mindestens zwei weiteren Spikezonen angeordnet ist, desto größer wird der Winkel der Längsachse des Spikepins in Bezug auf die axiale Richtung und beträgt maximal +/- 90°. Bei einem Winkel von +/- 90° in Bezug auf die axiale Richtung sind im Schulterbereich Seitenführungskräfte optimal übertragbar. Da nun kein abrupter Übergang der Winkel der Längsachsen der Spikepins über die Laufstreifenbreite, sondern erfindungsgemäß ein "harmonischer" Übergang in mehreren Schritten aufgrund von wenigstens zwei weiteren Spikezonen mit Spikepins mit jeweils größeren Winkeln erfolgt, ist eine Vergleichmäßigung der Kraftübertragung von Seitenführung und Traktion über die Laufstreifenbreite erhalten. Dieses wirkt sich positiv auf die Winterperformance des Fahrzeugluftreifens aus und der Zielkonflikt zwischen Übertragung von Traktionskraft und Seitenführungskraft ist auf einem höheren Niveau gelöst.

"Schulterbereich" meint denjenigen profilierten Laufstreifenbereich, welcher von der äußersten Umfangsrille, welche nicht ausschließlich in Umfangsrichtung verlaufen muss, sondern auch eine zick-zack-Form aufweisen kann, nach axial außen reicht.
Die "Basis-Spikezone" mit einer oder mehreren Basis-Spikespuren ist immer im mittleren Laufstreifenbereich angeordnet und kann in der geometrischen Mitte oder außerhalb dieser geometrischen Mitte des Laufstreifens liegen.

Wenn beschrieben ist, dass "ein Spike weiter axial außen angeordnet ist", dann ist gemeint, dass dieser Spike auf einer Spikespur positioniert, welche in einer weiter axial außen gelegenen Spikezone angeordnet ist.
Ein positiver Winkel (+) meint die Drehung der Längsachse im Uhrzeigersinn aus der axialen Richtung.
Ein negativer Winkel (-) meint die Drehung der Längsachse gegen den Uhrzeigersinn aus der axialen Richtung.
Eine "Spikezone" weist mindestens eine Spikespur auf, die Spikezone kann aber auch mehrere Spikespuren enthalten. In derselben Spikezone weisen alle Längsachsen der Endabschnitte der Spikepins der Spikes denselben Spikewinkel auf, welcher gleichsinnig oder abwechselnd gegensinnig sein kann.

Vorteilhaft ist es, wenn alle Spikes im Laufstreifen die gleiche Geometrie aufweisen. Alle Spikes im Laufstreifen sind also vom gleichen Spiketyp. Die Reifenlauffläche kann mit einer einfachen Maschine mit Spikes bestückt werden, welche nicht zwei oder mehr Spiketypen unterscheiden können muss. Daher ist die Produktion einfach und kostengünstig.
Gleicher "Spiketyp" meint, dass Spikepins und Spikekörper gleicher Geometrie in der Art zusammen gebaut werden, das alle Spikes innerhalb der allgemeinen Produktionsstreuung die gleiche Geometrie aufweisen.

In einer Spikezone nehmen alle Längsachsen der Endabschnitte der Spikepins gleichgroße Winkel zur axialen Richtung ein. Diese Winkel können ein gleiches Vorzeichen (gleichsinnig), aber auch positive und negative Vorzeichen aufweisen. Gleichsinnige Winkel pro Spikespur sind besonders bei laufrichtungsgebundenen Reifen sinnvoll. Abwechselnd gegensinnige Winkel pro Spikespur sind besonders bei symmetrischen nicht laufrichtungsgebundenen und asymmetrischen nicht laufrichtungsgebundenen Reifen, die keine vorbestimmte Laufrichtung haben, besonders sinnvoll, weil so die Seitenführungs- und Traktionsanteile symmetrisch aufgeteilt werden können.

Um die Wintereigenschaften zu verbessern, ist es sinnvoll, eine große Anzahl von Spikespuren zu verwenden, damit die Spikes nicht zu dicht hintereinander in derselben Spikespur platziert werden und gegebenenfalls unwirksam in der Kratzspur des vorrangegangenen Spikes eingreifen würden. Aus Produktions- und Performancesicht ist es daher sinnvoll, mehrere Spikespuren zu einer "Spikezone" zusammenzufassen. In derselben Spikezone weisen alle Längsachsen der Endabschnitte der Spikepins der Spikes denselben Winkel in Bezug auf die axiale Richtung auf, welcher gleichsinnig oder abwechselnd gegensinnig sein kann.

In einer bestimmten Ausführung der Erfindung sind die je wenigstens zwei weiteren Spikespuren in jeder der beiden Laufstreifenhälften angeordnet, wobei, insbesondere bei symmetrischen laufrichtungsgebundenen Laufstreifenprofilen, alle Winkel der Längsachsen der Endabschnitte der Spikepins in Bezug auf die axiale Richtung in der einen Laufstreifenhälfte positiv und alle Winkel in der anderen Laufstreifenhälfte negativ sind. Die Längsachsen der Endabschnitte der Spikes sind in einer Spikespur immer gleichsinnig, also alle entweder positiv oder alle negativ, orientiert. Zusätzlich sind die Längsachsen der Endabschnitte in der einen Laufstreifenhälfte alle positiv und in der anderen Laufstreifenhälfte alle negativ orientiert. Hierdurch ist insbesondere bei symmetrischen laufrichtungsgebundenen Laufstreifenprofilen eine ausgewogene Winterperformance über die Laufstreifenbreite erhalten. Es lässt sich eine gleichmäßig und symmetrische Verteilung der Spikewinkel und damit ein harmonisches Fahrverhalten erzeugen.

In einer anderen Ausführung der Erfindung sind in jeder der beiden Laufstreifenhälften die je wenigstens zwei weiteren Spikezonen angeordnet, wobei, insbesondere bei asymmetrischen Laufstreifenprofilen, die Winkel der Längsachsen der Endabschnitte der Spikepins in Bezug auf die axiale Richtung in einer Spikespur gleich groß sind, jedoch abwechselnd über den Umfang dieser Spikespur positive und negative Vorzeichen aufweisen. Hierdurch ist auch bei asymmetrischen Laufstreifenprofilen eine gleichmäßige Kraftübertragung gewährleistet.

Zweckmäßig ist es, wenn eine Laufstreifenhälfte 3 bis 15 weitere Spikespuren, welche in Spikezonen liegen, aufweist. Durch diese Anzahl an weiteren Spikespuren ist eine besonders harmonische "Auffächerung" der Winkel der Endabschnitte in mehreren Stufen über die Laufstreifenbreite möglich. Dies ist sinnvoll, weil sich so ein besonders harmonisches Fahrverhalten erzeugen lässt.

Vorteilhaft ist es, wenn die Basis-Spikezone eine oder zwei Basis-Spikespur(en) aufweist, welche im mittigen Bereich des Laufstreifens angeordnet sind und dass die Winkel der Längsachsen der Endabschnitte der Spikepins in beiden Basis-Spikespuren etwa gleich sind. "Etwa" bedeutet hier im Rahmen der Produktionstoleranz. Diese Spikes in der oder den Basisspur(en) tragen besonders zu den hervorragenden Brems- und Traktionseigenschaften bei, da sie maximal für die longitudinale Kraftübertragung ausgerichtet sind.

Vorteilhaft ist eine Ausgestaltung der Erfindung, bei der die Basis-Spikezone eine oder zwei Basis-Spikespur(en) aufweist, welche im mittigen Bereich des Laufstreifens angeordnet ist und bei der die Längsachsen der Endabschnitte der Spikepins der Spikes der weiteren Spikezonen in Bezug auf die axiale Richtung im mittleren Laufstreifenbereich Winkel in einem Bereich von +/- 5° - +/- 12° und im Schulterbereich in einem Bereich von +/- 12° - +/-90° in Bezug auf die axiale Richtung einnehmen. Hierdurch ist der Zielkonflikt zwischen Traktion und Seitenführung auf einem besonders hohen Niveau gelöst. Durch die dynamische Lastverlagerung bei Kurvenfahrt stellt sich auf der Außenschulter ein längere "Bodenaufstandsfläche" ein, wodurch die für die Seitenführung wichtigen, stark geneigten Spikes besonders zur Geltung kommen. Bei Geradeausfahrt mit symmetrischer "Bodenaufstandsfläche" kommen besonders die nur leicht geneigten mittleren Spikes zur vollen Geltung.

In einer vorteilhaften Ausgestaltung der Erfindung sind 7 Spikezonen im Laufstreifen angeordnet, von denen drei weitere Spikezonen in der linken Laufstreifenhälfte, drei weitere Spikezonen in der rechten Laufstreifenhälfte sowie eine Basis-Spikezone mit zwei Spikespuren im mittigen Bereich des Laufstreifens angeordnet sind und dass die Längsachsen der Endabschnitte der Spikepins der Spike von links nach rechts über den Laufstreifen betrachtet Winkel folgender Bereiche mit der axialen Richtung einnehmen: 30° bis 90°, 12° bis 30°, 5° bis 12°, 0° bis +/-7°, 0° bis +/-7°, -5°bis -12, -12° bis -30°, -30° bis -90° oder vice verca, nämlich: -30° bis -90°, -12° bis -30°, -5° bis -12°, 0° bis +/-7°, 0° bis +/-7°, 5° bis 12°, 12°bis 30°, 30° bis 90°, wobei die Winkel größer werden, je weiter axial außen der Spike angeordnet ist, weil nur so sichergestellt werden kann, dass die für die Seitenführung wichtigen, starkgeneigten Spikes sich in den Schulterblöcken befinden. Bei dieser Ausführung weisen die 6 weiteren Spikezonen vorzugsweise je eine Spikespur auf.

In einer bevorzugten Ausführung der Erfindung sind 7 Spikezonen im Laufstreifen angeordnet, von denen drei weitere Spikezonen in der linken Laufstreifenhälfte, drei weitere Spikezonen in der rechten Laufstreifenhälfte sowie die Basis-Spikezone mit einer Basis-Spikespur im mittigen Bereich des Laufstreifens angeordnet sind und die Längsachsen der Endabschnitte der Spikepins der Spikes nehmen von links nach rechts über den Laufstreifen betrachtet Winkel folgender Bereiche mit der axialen Richtung ein: +45°, +15°, +7°, 0°, -7°, -15°, -45° oder vice verca, nämlich : -45°, -15°, -7°, 0°, 7°, 15°, 45°. Bei dieser Ausführung weisen die 6 weiteren Spikezonen vorzugsweise je eine Spikespur auf.

In einer anderen bevorzugten Ausführung der Erfindung sind 7 Spikezonen im Laufstreifen angeordnet, von denen drei weitere Spikezonen in der linken Laufstreifenhälfte, drei weitere Spikezonen in der rechten Laufstreifenhälfte sowie die Basis-Spikezone mit einer Basis-Spikespur im mittigen Bereich des Laufstreifens angeordnet sind und die Längsachsen der Endabschnitte der Spikepins der Spikes nehmen von links nach rechts über den Laufstreifen betrachtet Winkel folgender Bereiche mit der axialen Richtung ein: +/-45°, +/-15°, +/-7°, 0°, +/-7°, +/-15°, +/-45°, wobei in einer Spikespur die Vorzeichen der Winkel der Längsachsen von nacheinander angeordneten Spikes einander abwechseln. Bei dieser Ausführung weisen die 6 weiteren Spikezonen vorzugsweise je eine Spikespur auf.

Weitere Merkmale, Vorteile und Einzelheiten der Erfindung werden nun anhand der von Zeichnungen, die schematische Ausführungsbeispiele darstellen, näher beschrieben. Dabei zeigen die
Fig. 1 eine Draufsicht auf einen Laufstreifenabschnitt eines ersten erfindungsgemäßen Fahrzeugluftreifens;
Fig. 2 eine Draufsicht auf einen Laufstreifenabschnitt eines zweiten erfindungsgemäßen Fahrzeugluftreifens;
Fig. 3 eine Draufsicht auf einen Laufstreifenabschnitt eines dritten erfindungsgemäßen Fahrzeugluftreifens.

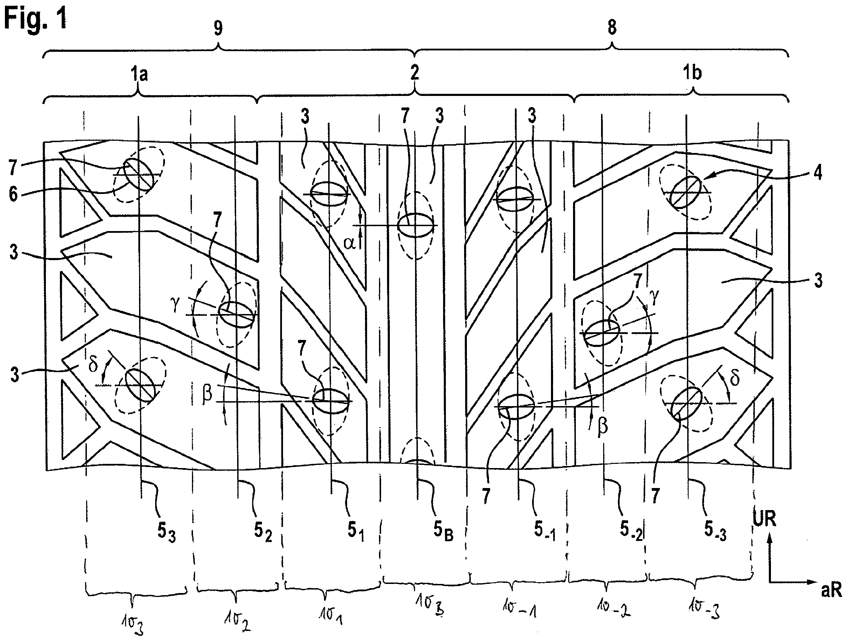

Die Fig. 1 zeigt eine Draufsicht auf einen Laufstreifenabschnitt eines ersten erfindungsgemäßen PKW-Fahrzeugluftreifens. Das Laufstreifenprofil dieses PKW-Reifens ist symmetrisch und laufrichtungsgebunden. Der Laufstreifenabschnitt ist repräsentativ für den gesamten Laufstreifen. Der Laufstreifen weist zwei Schulterbereiche 1a, 1b und zwischen diesen Schulterbereichen 1a, 1b einen mittleren Laufstreifenbereich 2 auf. In den Profilpositiven 3 des Laufstreifens sind Spikes 4 angeordnet, welche in Spikespuren 5₁, 5₂, 5₃, 5_{B}, 5₋₁, 5₋₂, 5₋₃ über die Umfangsrichtung UR des Laufstreifens umlaufen. Die Spikespuren 5₁, 5₂, 5₃, 5_{B}, 5₋₁, 5₋₂, 5₋₃ sind Spikezonen 10₁, 10₂, 10₃, 10_{B}, 10₋₁, 10₋₂, 10₋₃ zugeordnet, deren Zonengrenzen gestrichelt dargestellt sind. Die Spikezonen 10₁,10₂, 10₃, 10_{B}, 10₋₁, 10₋₂, 10₋₃ weisen eine bestimmte axiale Breite auf und sind über den Umfang des Laufstreifens umlaufend angeordnet. Eine Spikezone 10₁, 10₂, 10₃, 10_{B}, 10₋₁, 10₋₂, 10₋₃ enthält in diesem Ausführungsbeispiel jeweils nur eine einzige Spikespur 5₁, 5₂, 5₃, 5_{B}, 5₋₁, 5₋₂, 5₋₃. Alle Spikes 4 sind vom gleichen Spiketypen und weisen somit die gleiche Geometrie auf. Ein Spike 4 weist einen Spikepin mit einem die Laufstreifenoberfläche überragenden Endabschnitt 6 auf, wobei dieser Endabschnitt 6 in Draufsicht auf den Laufstreifen unrund und länglich ausgebildet ist und in einer größten Erstreckung eine Längsachse 7 definiert. Im mittleren Laufstreifenbereich 2 ist eine Basis-Spikezone 10_{B} mit einer Basis-Spikespur 5_{B} mit einem Spike 4 positioniert, dessen Längsachse 7 des Endabschnittes 6 des Spikepins einen Winkel α von etwa 0° zur axialen Richtung aR einnimmt. Diese Basis-Spikespur 5_{B} teilt den Laufstreifen in eine rechte Laufstreifenhälfte 8 und in eine linke Laufstreifenhälfte 9.

Es sind in jeder Laufstreifenhälfte 8, 9 drei weitere Spikezonen 10₁, 10₂, 10₃,10₋₁, 10₋₂, 10₋₃ mit jeweils einer Spikespur 5₁, 5₂, 5₃, 5₋₁, 5₋₂, 5₋₃ mit Spikes 4 zusätzlich zu der Basis-Spikespur 5_{B} angeordnet, deren Längsachsen 7 der Endabschnitte 6 der Spikepins je größere Winkel β, γ, δ zur axialen Richtung aR einnehmen, je weiter axial außen die Spikezone des Spikes 4 positioniert ist. Die Spikes 4 einer jeden Spikezone 10₁, 10₂, 10₃, 10_{B}, 10₋₁, 10₋₂, 10₋₃ sind in Bezug auf die Winkel, welche die Längsachsen 7 der Endabschnitte 6 der Spikepins mit der axialen Richtung aR einnehmen gleichsinnig, d.h. diese sind in einer Spikezone 10₁, 10₂, 10₃, 10_{B}, 10₋₁, 10₋₂, 10₋₃ entweder positiv oder negativ orientiert. Die Längsachsen 7 der Endabschnitte 6 der Spikepins der auf diesen weiteren Spikespuren 5₁, 5₂, 5₃, 5₋₁, 5₋₂, 5₋₃ positionierten Spikes 4 nehmen Winkel β, γ, δ in einem Bereich von 5° bis 90° in Bezug zur axialen Richtung aR ein. Somit sind die Anzahl und Anordnung der Spikespuren 5₁, 5₂, 5₃, 5₋₁, 5₋₂, 5₋₃ sowie die Ausrichtung und Größe der Winkel β, γ, δ der Längsachsen 7 der Endabschnitte 6 der Spikepins spiegelsymmetrisch in Bezug auf die Basis-Spikespur 5_{B} im Laufstreifen angeordnet.
Es sind somit 7 Spikezonen und 7 Spikespuren 5₁, 5₂, 5₃, 5_{B}, 5₋₁, 5₋₂, 5₋₃ im Laufstreifen angeordnet, von denen drei weitere Spikezonen 10₁, 10₂, 10₃ mit je einer weiteren Spikespur 5₁, 5₂, 5₃ in der linken Laufstreifenhälfte 9, drei weitere Spikezonen 10₋₁, 10₋₂, 10₋₃ mit je einer weiteren Spikespur 5₋₁, 5₋₂, 5₋₃ in der rechten Laufstreifenhälfte 8 sowie eine Basis-Spikezone 10_{B} mit einer Basis-Spikespur 5_{B} im mittigen Bereich 2 des Laufstreifens angeordnet. Die Längsachsen 7 der Endabschnitte 6 der Spikepins der Spike 4 von links nach rechts über den Laufstreifen betrachtet Winkel folgender Bereiche mit der axialen Richtung einnehmen: 45°, 15°, 5°, 0°, -5°, -15°, -45°. Somit sind die Längsachsen 7 der linken Laufstreifenhälfte 9 spiegelsymmetrisch zu den Längsachsen 7 der rechten Laufstreifenhälfte 8 ausgebildet sind und die Winkel in Bezug auf die axiale Richtung aR werden größer, je weiter axial außen der Spike 4 angeordnet ist.

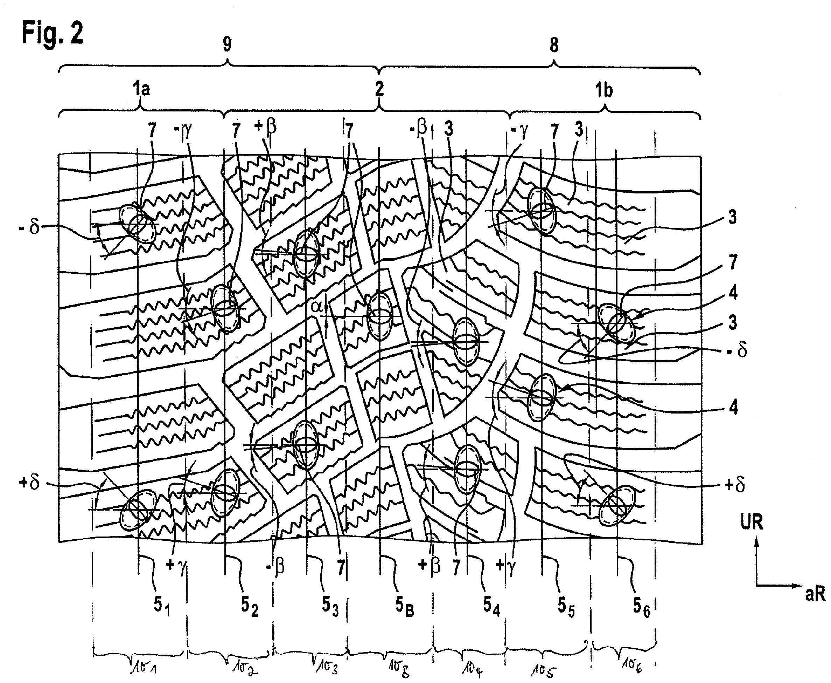

Die **Fig. 2** zeigt eine Draufsicht auf einen Laufstreifenabschnitt eines zweiten erfindungsgemäßen PKW-Fahrzeugluftreifens. Das Laufstreifenprofil dieses PKW-Reifens ist asymmetrisch und nichtlaufrichtungsgebunden.

Der Laufstreifenabschnitt ist repräsentativ für den gesamten Laufstreifen. Der Laufstreifen weist zwei Schulterbereiche 1a, 1b und zwischen diesen Schulterbereichen 1a, 1b einen mittleren Laufstreifenbereich 2 auf. In den Profilpositiven 3 des Laufstreifens sind Spikes 4 angeordnet, welche in Spikespuren 5_{B}, ₁₋₆ über den Umfang des Laufstreifens umlaufen. Die Spikespuren 5_{B}, ₁₋₆ sind Spikezonen 10_{B}, ₁₋₆ zugeordnet, deren Zonengrenzen gestrichelt dargestellt sind. Die Spikezonen 10_{B}, ₁₋₆ weisen eine bestimmte axiale Breite auf und sind über den Umfang des Laufstreifens umlaufend angeordnet. Eine Spikezone 10_{B}, ₁₋₆ enthält in diesem Ausführungsbeispiel jeweils nur eine einzige Spikespur 5_{B}, ₁₋₆. Alle Spikes 4 sind vom gleichen Spiketypen und weisen somit die gleiche Geometrie auf. Ein Spike 4 weist einen Spikepin mit einem die Laufstreifenoberfläche überragenden Endabschnitt 6 auf, wobei dieser Endabschnitt 6 in Draufsicht auf den Laufstreifen unrund und länglich ausgebildet ist und in einer größten Erstreckung eine Längsachse 7 definiert. Im mittleren Laufstreifenbereich 2 ist eine Basis-Spikezone 10_{B} mit einer Basis-Spikespur 5_{B} mit einem Spike 4 positioniert, dessen Längsachse 7 des Endabschnittes des Spikepins einen Winkel α von etwa 0° zur axialen Richtung aR einnimmt. Diese Basis-Spikespur 5_{B} teilt den Laufstreifen in eine rechte Laufstreifenhälfte 8 und in eine linke Laufstreifenhälfte 9.

Es sind in jeder Laufstreifenhälfte drei weitere Spikezonen 10₁₋₆ mit je einer Spikespur 5₁₋₆ mit Spikes 4 zusätzlich zur Basis-Spikezone 10_{B} mit einer Basis-Spikespur 5_{B} angeordnet, deren Längsachsen 7 der Endabschnitte 6 der Spikepins je größere Winkel +/-β, +/- γ, +/-δ zur axialen Richtung aR einnehmen, je weiter axial außen die Spikezone 10₁₋₆ der Spikes 4 positioniert ist. Die Spikes 4 einer jeden Spikespur 5_{B}, ₁₋₆ sind in Bezug auf die Winkel, welche die Längsachsen 7 der Endabschnitte 6 der Spikepins mit der axialen Richtung aR einnehmen gleichgroß, aber in Reifenumfangrichtung UR hintereinander abwechseln positiv und negativ orientiert.
Es sind 7 Spikezonen 10_{B}, ₁₋₆ und 7 Spikespuren 5_{B}, ₁₋₆ im Laufstreifen angeordnet, von denen drei weitere Spikezonen 10₁₋₃ mit je einer Spikespur 5₁₋₃ in der linken Laufstreifenhälfte 9, drei weitere Spikezonen 10₄₋₆ mit je einer Spikespur 5₄₋₆ in der rechten Laufstreifenhälfte 8 sowie eine Basis-Spikezone 10_{B} mit einer Basis-Spikespur 5_{B} im mittigen Bereich 2 des Laufstreifens angeordnet sind. Die Längsachsen 7 der Endabschnitte 6 der Spikepins der Spikes 4 nehmen von links nach rechts über den Laufstreifen betrachtet Winkel folgender Bereiche mit der axialen Richtung ein: +/-45°, +/- 15°, +/- 5°, 0°, +/-5°, +/-15°, +/-45°.

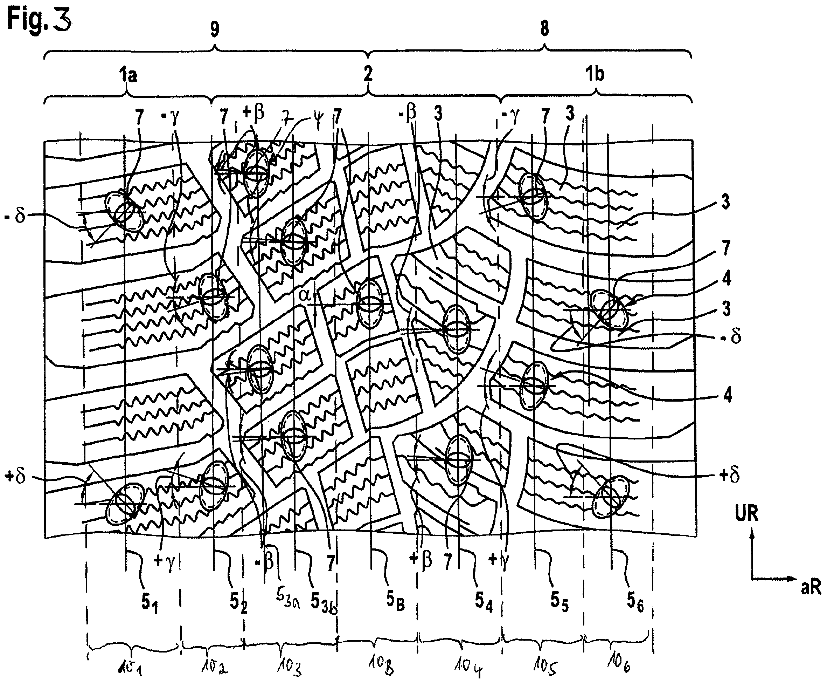

Die **Fig. 3** zeigt eine Draufsicht auf einen Laufstreifenabschnitt eines dritten erfindungsgemäßen Fahrzeugluftreifens. Der Laufstreifenabschnitt der Fig.3 unterscheidet sich von dem Laufstreifenabschnitt der Fig. 2 darin, dass eine der weiteren Spikezonen 10₁₋₆, nämlich die Spikezone 10₃ zwei Spikespuren 5₃ₐ, _{3b} mit Spikes 4 aufweist. In derselben Spikezone weisen alle Längsachsen 7 der Endabschnitte 6 der Spikepins der Spikes 4 denselben Winkel, hier +/- 5° in Bezug auf die axiale Richtung aR auf, welcher in jeder Spikespur 5_{3a, 3b} abwechselnd gegensinnig ist.

### Bezugszeichenliste

- 1a: Schulterbereich
- 1b: Schulterbereich
- 2: mittlerer Laufstreifenbereich
- 3: Profilpositiv
- 4: Spike
- 5_{B}: Basis-Spikespur
- 5_{1,2 - n}: weitere Spikespur
- 6: Endabschnitt
- 7: Längsachse
- 8: rechte Laufstreifenhälfte
- 9: linke Laufstreifenhälfte
- 10_{B}: Basis-Spikezone
- 10_{1,2-n}: (weitere) Spikezone

- α, β, γ, δ: Winkel
- aR: axiale Richtung
- UR: Umfangsrichtung

## Patentansprüche

1. Fahrzeugluftreifen mit einem Laufstreifen, welcher zwei Schulterbereiche (1a, 1b) und zwischen diesen Schulterbereichen (1a, 1b) einen mittleren Laufstreifenbereich (2) aufweist, wobei in den Profilpositiven (3) des Laufstreifens Spikes (4) angeordnet sind, welche in Spikespuren über den Umfang des Laufstreifens umlaufen und wobei die Spikespuren (5_{B}, _{1, 2-n}) Spikezonen (10_{B}, _{1, 2-n}) zugeordnet sind, welche ebenfalls über den Umfang des Laufstreifens umlaufen, wobei in jeder Spikezone (10_{B}, _{1, 2 - n}) wenigstens eine Spikespur (5_{B}, ₁, _{2 - n}) angeordnet ist, wobei ein Spike (4) einen Spikepin mit einem die Laufstreifenoberfläche überragenden Endabschnitt (6) aufweist, wobei dieser Endabschnitt (6) in Draufsicht auf den Laufstreifen unrund und länglich ausgebildet ist und in einer größten Erstreckung eine Längsachse (7) definiert, wobei im mittleren Laufstreifenbereich (2) eine Basis-Spikezone (10_{B}) mit einem Spike (4) positioniert ist, dessen Längsachse (7) des Endabschnittes (6) des Spikepins einen Winkel α von 0° bis +/- 7° zur axialen Richtung (aR) einnimmt und wobei die Basis-Spikezone(10_{B}) den Laufstreifen in eine rechte Laufstreifenhälfte (8) und in eine linke Laufstreifenhälfte (9) teilt, **dadurch gekennzeichnet, dass** in einer Laufstreifenhälfte (8, 9) wenigstens 2 weitere Spikezonen (10_{1,2-n}) mit Spikes (4) zusätzlich zu der Basis-Spikezone (10_{B}) angeordnet sind, deren Längsachsen (7) der Endabschnitte (6) der Spikepins je größere Winkel zur axialen Richtung (aR) einnehmen, je weiter axial außen die Spikezone (10_{1,2-n}) des Spikes (4) positioniert ist und dass die Längsachsen (7) der Endabschnitte (6) der Spikepins der in diesen weiteren Spikezonen (10_{1, 2-n}) positionierten Spikes (4) Winkel β, γ, δ in einem Bereich von +/- 5° bis +/- 90° in Bezug zur axialen Richtung (aR) einnehmen.

2. Fahrzeugluftreifen nach Anspruch 1, **dadurch gekennzeichnet, dass** alle Spikes (4) im Laufstreifen die gleiche Geometrie aufweisen.

3. Fahrzeugluftreifen nach Anspruch 1 oder 2, **dadurch gekennzeichnet, dass** in einer Spikezone (10_{B}, _{1, 2-n}) alle Längsachsen (7) der Endabschnitte (6) der Spikepins gleichgroße Winkel α- δ zur axialen Richtung (aR) einnehmen.

4. Fahrzeugluftreifen nach einem der Ansprüche 1 bis 3, **dadurch gekennzeichnet, dass** in jeder der beiden Laufstreifenhälften (8, 9) die je wenigstens zwei weiteren Spikezonen (10_{1, 2 - n}) angeordnet sind, wobei, insbesondere bei symmetrischen laufrichtungsgebundenen Laufstreifenprofilen, alle Winkel α- δ der Längsachsen (7) der Endabschnitte (6) der Spikepins in Bezug auf die axiale Richtung (aR) in der einen Laufstreifenhälfte (8, 9) positiv und alle in der anderen Laufstreifenhälfte (8, 9) negativ sind.

5. Fahrzeugluftreifen nach Anspruch 4, **dadurch gekennzeichnet, dass** die Anzahl und Anordnung der Spikezonen (10_{1, 2-n}) sowie die Ausrichtung und Größe der Winkel der Längsachsen (7) der Endabschnitte (6) der Spikepins spiegelsymmetrisch in Bezug auf die Basis-Spikezone (10_{B}) im Laufstreifen angeordnet sind.

6. Fahrzeugluftreifen nach Anspruch 1 bis 3, **dadurch gekennzeichnet, dass** in beiden Laufstreifenhälften (8, 9) die je wenigstens zwei weiteren Spikezonen (10_{1, 2-n}) angeordnet sind, wobei, insbesondere bei asymmetrischen Laufstreifenprofilen, die Winkel der Längsachsen (7) der Endabschnitte (6) der Spikepins in Bezug auf die axiale Richtung (aR) in einer Spikespur (5_{1, 2-n}) gleich groß, jedoch über den Umfang einer Spikespur (5_{1,2 - n}) abwechselnd positive und negative Vorzeichen aufweisen.

7. Fahrzeugluftreifen nach einem oder mehreren der vorangehenden Ansprüche, **dadurch gekennzeichnet, dass** eine Laufstreifenhälfte (8, 9) 3 bis 15 weitere Spikespuren (5_{1, 2-n}), welche in Spikezonen (10_{1, 2-n}) liegen, aufweist.

8. Fahrzeugluftreifen nach einem oder mehreren der vorangehenden Ansprüche, **dadurch gekennzeichnet, dass** die Basis-Spikezone (10_{B}) eine oder zwei Basis-Spikespur(en) aufweist, welche im mittigen Bereich (2) des Laufstreifens angeordnet sind und dass die Winkel der Längsachsen (7) der Endabschnitte (6) der Spikepins in beiden Basis-Spikespuren (5_{B}) etwa gleich sind.

9. Fahrzeugluftreifen nach einem oder mehreren der vorangehenden Ansprüche, **dadurch gekennzeichnet, dass** die Basis-Spikezone (10_{B}) eine oder zwei Basis-Spikespur(en) aufweist, welche im mittigen Bereich des Laufstreifens (2) angeordnet ist und dass die Längsachsen (7) der Endabschnitte (6) der Spikepins der Spikes der weiteren Spikezonen (10_{1,2-n}) in Bezug auf die axiale Richtung (aR) im mittleren Laufstreifenbereich (2) Winkel in einem Bereich von +/- 5° - +/- 12° und im Schulterbereich (1a, 1b) in einem Bereich von +/- 12° - +/-90° in Bezug auf die axiale Richtung (aR) einnehmen.

10. Fahrzeugluftreifen nach einem oder mehreren der vorangehenden Ansprüche, **dadurch gekennzeichnet, dass** 7 Spikezonen (10_{B}, _{1, 2 - n}) im Laufstreifen angeordnet sind, von denen drei weitere Spikezonen (10_{1, 2, 3}) in der linken Laufstreifenhälfte (9), drei weitere Spikezonen (10_{1, 2, 3}) in der rechten Laufstreifenhälfte (8) sowie eine Basis-Spikezone (10_{B}) mit zwei Spikespuren (5_{B}) im mittigen Bereich des Laufstreifens (2) angeordnet sind und dass die Längsachsen (7) der Endabschnitte (6) der Spikepins der Spike (4) von links nach rechts über den Laufstreifen betrachtet Winkel folgender Bereiche mit der axialen Richtung (aR) einnehmen: 30° bis 90°, 12° bis 30°, 5° bis 12°, 0° bis +/-7°, 0° bis +/-7°, -5°bis -12, -12° bis -30°, - 30° bis -90° oder vice verca, wobei die Winkel größer werden, je weiter axial außen der Spike angeordnet ist.

11. Fahrzeugluftreifen nach einem oder mehreren der vorangehenden Ansprüche, **dadurch gekennzeichnet, dass** 7 Spikezonen (10_{B}, _{1, 2-n}) im Laufstreifen angeordnet sind, von denen drei weitere Spikezonen (10_{1, 2, 3}) in der linken Laufstreifenhälfte (9), drei weitere Spikezonen (10₋₁, ₋₂, ₋₃) in der rechten Laufstreifenhälfte (8) sowie die Basis-Spikezone (10_{B}) mit einer Basis-Spikespur (5_{B}) im mittigen Bereich des Laufstreifens (2) angeordnet sind und dass die Längsachsen (7) der Endabschnitte (6) der Spikepins der Spikes (4) von links nach rechts über den Laufstreifen betrachtet Winkel folgender Bereiche mit der axialen Richtung (aR) einnehmen: +45°, +15°, +7°, 0°, -7°, -15°, -45° oder vice verca.

12. Fahrzeugluftreifen nach einem oder mehreren der vorangehenden Ansprüche 1 bis 10, **dadurch gekennzeichnet, dass** 7 Spikezonen (10_{B}, _{1, 2 - n}) im Laufstreifen angeordnet sind, von denen drei weitere Spikezonen (10_{1, 2, 3}) in der linken Laufstreifenhälfte (9), drei weitere Spikezonen (10_{4, 5, 6}) in der rechten Laufstreifenhälfte (8) sowie die Basis-Spikezone (10_{B}) mit einer Basis-Spikespur (5_{B}) im mittigen Bereich des Laufstreifens (2) angeordnet sind und dass die Längsachsen (7) der Endabschnitte (6) der Spikepins der Spikes (4) von links nach rechts über den Laufstreifen betrachtet Winkel folgender Bereiche mit der axialen Richtung einnehmen: +/-45°, +/-15°, +/-7°, 0°, +/-7°, +/-15°, +/-45°, wobei entweder in einer, vorzugweise in allen Spikespuren (5₁₋₆) die Vorzeichen der Winkel der Längsachsen (7) von nacheinander angeordneten Spikes (4) einander abwechseln
oder in einer, vorzugsweise in allen Spikezonen (10₁₋₆), welche mehr als eine Spikespur (5₁₋₆) aufweisen, eine Spikespur (5₁₋₆) dieser Spikezone (10₁₋₆) ausschließlich positive Vorzeichen und eine weitere Spikespur(5₁₋₆) derselben Spikezone (10₁₋₆) ausschließlich negative Vorzeichen der Winkel der Längsachsen (7) der Spikes (4) aufweisen.

13. Fahrzeugluftreifen nach einem oder mehreren der vorgenannten Ansprüche, **dadurch gekennzeichnet, dass** bei einer Anordnung einer geraden Anzahl von Spikezonen, von deren Anzahl die Basis-Spikezone ausgenommen ist, die Basis-Spikezone zwei Basisspuren aufweist.

14. Fahrzeugluftreifen nach einem oder mehreren der vorgenannten Ansprüche 1 bis 12, **dadurch gekennzeichnet, dass** bei einer Anordnung einer ungeraden Anzahl von Spikezonen, von deren Anzahl die Basis-Spikezone ausgenommen ist, die Basis-Spikezone eine Basisspur aufweist.

## Claims

1. Pneumatic vehicle tire having a tread, which has two shoulder regions (1a, 1b) and a central tread region (2) between said shoulder regions (1a, 1b), wherein spikes (4) are arranged in the profile positives (3) of the tread, which spikes run in spike tracks in an encircling manner over the circumference of the tread, and wherein the spike tracks (5_{B}, _{1, 2 - n}) are assigned to spike zones (10_{B}, _{1, 2- n}), which likewise run in an encircling manner over the circumference of the tread, wherein at least one spike track (5_{B}, _{1, 2 - n}) is arranged in each spike zone (10_{B}, _{1, 2} - ₙ), wherein a spike (4) has a spike pin with an end portion (6) projecting beyond the tread surface, wherein said end portion (6) in a top view of the tread is non-circular and elongate and, in a greatest extent, defines a longitudinal axis (7), wherein a base spike zone (10_{B}) having a spike (4), of which the longitudinal axis (7) of the end portion (6) of the spike pin assumes an angle α of 0° to +/-7° to the axial direction (aR), is positioned in the central tread region (2), and wherein the base spike zone (10_{B}) divides the tread into a right tread half (8) and into a left tread half (9), **characterized in that** at least 2 further spike zones (10₁, _{2 - n}) having spikes (4) are arranged in addition to the base spike zone (10_{B}) in a tread half (8, 9), of which spikes the longitudinal axes (7) of the end portions (6) of the spike pins assume greater angles to the axial direction (aR) the further axially outward the spike zone (10₁, _{2 - n}) of the spike (4) is positioned, and **in that** the longitudinal axes (7) of the end portions (6) of the spike pins of the spikes (4) positioned in said further spike zones (10₁, _{2 - n}) assume angles β, γ, δ in a range from +/- 5° to +/- 90° with respect to the axial direction (aR) .

2. Pneumatic vehicle tire according to Claim 1, **characterized in that** all of the spikes (4) in the tread have the same geometry.

3. Pneumatic vehicle tire according to Claim 1 or 2, **characterized in that**, in a spike zone (10_{B}, _{1, 2 - n}), all of the longitudinal axes (7) of the end portions (6) of the spike pins assume angles α- δ of identical size to the axial direction (aR).

4. Pneumatic vehicle tire according to one of Claims 1 to 3, **characterized in that** the in each case at least two further spike zones (10₁, _{2 - n}) are arranged in each of the two tread halves (8, 9), wherein, in particular in the case of symmetrical directional tread profiles, all of the angles α- δ of the longitudinal axes (7) of the end portions (6) of the spike pins are positive with respect to the axial direction (aR) in the one tread half (8, 9) and all are negative in the other tread half (8, 9) .

5. Pneumatic vehicle tire according to Claim 4, **characterized in that** the number and arrangement of the spike zones (10₁, _{2 - n}) and the orientation and size of the angles of the longitudinal axes (7) of the end portions (6) of the spike pins are arranged mirror-symmetrically with respect to the base spike zone (10_{B}) in the tread.

6. Pneumatic vehicle tire according to Claims 1 to 3, **characterized in that** the in each case at least two further spike zones (10₁, _{2 - n}) are arranged in the two tread halves (8, 9), wherein, in particular in the case of asymmetrical tread profiles, the angles of the longitudinal axes (7) of the end portions (6) of the spike pins with respect to the axial direction (aR) in a spike track (5_{1, 2 - n}) are of the same size, but have positive and negative signs in an alternating manner over the circumference of a spike track (5_{1, 2 - n}).

7. Pneumatic vehicle tire according to one or more of the preceding claims, **characterized in that** a tread half (8, 9) has 3 to 15 further spike tracks (5_{1, 2 - n}) which lie in spike zones (10_{1, 2 - n}).

8. Pneumatic vehicle tire according to one or more of the preceding claims, **characterized in that** the base spike zone (10_{B}) has one or two base spike tracks which are arranged in the central region (2) of the tread, and **in that** the angles of the longitudinal axes (7) of the end portions (6) of the spike pins are approximately identical in the two base spike tracks (5_{B}).

9. Pneumatic vehicle tire according to one or more of the preceding claims, **characterized in that** the base spike zone (10_{B}) has one or two base spike tracks which are arranged in the central region of the tread (2), and **in that** the longitudinal axes (7) of the end portions (6) of the spike pins of the spikes of the further spike zones (10_{1,2-n}) assume angles in a range of +/- 5° - +/-12° with respect to the axial direction (aR) in the central tread region (2) and in a range of +/- 12° - +/-90° with respect to the axial direction (aR) in the shoulder region (1a, 1b).

10. Pneumatic vehicle tire according to one or more of the preceding claims, **characterized in that** 7 spike zones (10_{B}, _{1, 2 - n}) are arranged in the tread, of which spike zones three further spike zones (10_{1, 2, 3}) are arranged in the left tread half (9), three further spike zones (10₁, _{2, 3}) are arranged in the right tread half (8) and one base spike zone (10_{B}) having two spike tracks (5_{B}) is arranged in the central region of the tread (2), and **in that** the longitudinal axes (7) of the end portions (6) of the spike pins of the spikes (4) assume angles of the following ranges with the axial direction (aR), as viewed from the left to the right over the tread: 30° to 90°, 12° to 30°, 5° to 12°, 0° to +/-7°, 0° to +/-7°, -5° to -12, -12° to -30°, -30° to -90° or vice versa, wherein the angles become greater the further axially outward the spike is arranged.

11. Pneumatic vehicle tire according to one or more of the preceding claims, **characterized in that** 7 spike zones (10_{B}, _{1, 2 - n}) are arranged in the tread, of which spike zones three further spike zones (10_{1, 2, 3}) are arranged in the left tread half (9), three further spike zones (10₋₁, ₋₂, ₋₃) are arranged in the right tread half (8) and the base spike zone (10_{B}) having a base spike track (5_{B}) is arranged in the central region of the tread (2), and **in that** the longitudinal axes (7) of the end portions (6) of the spike pins of the spikes (4) assume angles of the following ranges with the axial direction (aR), as viewed from the left to the right over the tread: +45°, +15°, +7°, 0°, -7°, -15°, -45° or vice versa.

12. Pneumatic vehicle tire according to one or more of the preceding Claims 1 to 10, **characterized in that** 7 spike zones (10_{B}, _{1, 2 - n}) are arranged in the tread, of which spike zones three further spike zones (10₁, _{2, 3}) are arranged in the left tread half (9), three further spike zones (10_{4, 5, 6}) are arranged in the right tread half (8) and the base spike zone (10_{B}) having a base spike track (5_{B}) is arranged in the central region of the tread (2), and **in that** the longitudinal axes (7) of the end portions (6) of the spike pins of the spikes (4) assume angles of the following ranges with the axial direction, as viewed from the left to the right over the tread: +/- 45°, +/-15°, +/- 7°, 0°, +/- 7°, +/- 15°, +/- 45°, wherein either in one, preferably in all of the spike tracks (5₁₋₆), the signs of the angles of the longitudinal axes (7) of successively arranged spikes (4) alternate,
or in one, preferably in all of the spike zones (10₁₋₆) which have more than one spike track (5₁₋₆), one spike track (5₁₋₆) of said spike zone (10₁₋₆) has only positive signs and a further spike track (5₁₋₆) of the same spike zone (10₁₋₆) has only negative signs of the angles of the longitudinal axes (7) of the spikes (4).

13. Pneumatic vehicle tire according to one or more of the preceding claims, **characterized in that**, in the case of an arrangement of an even number of spike zones, the number of which excludes the base spike zone, the base spike zone has two base tracks.

14. Pneumatic vehicle tire according to one or more of the preceding Claims 1 to 12, **characterized in that**, in the case of an arrangement of an odd number of spike zones, the number of which excludes the base spike zone, the base spike zone has a base track.

## Revendications

1. Pneumatique de véhicule muni d'une bande de roulement, qui comprend deux régions d'épaulement (1a, 1b) et, entre ces régions d'épaulement (1a, 1b), une région médiane de bande de roulement (2), des crampons (4) étant agencés dans les éléments positifs de profil (3) de la bande de roulement, qui entourent circonférentiellement la bande de roulement dans des pistes de crampons, et les pistes de crampons (5_{B}, _{1, 2-n}) étant associées à des zones de crampons (10_{B}, _{1, 2-n}) qui entourent également circonférentiellement la bande de roulement, au moins une piste de crampons (5_{B}, _{1, 2-n}) étant agencée dans chaque zone de crampons (10_{B}, _{1, 2-n}), un crampon (4) comprenant une pointe de crampon munie d'une section d'extrémité (6) dépassant de la surface de bande de roulement, cette section d'extrémité (6) étant configurée sous forme non circulaire et allongée en vue de dessus sur la bande de roulement, et définissant un axe longitudinal (7) dans une étendue maximale, une zone de crampons de base (10_{B}) munie d'un crampon (4) étant positionnée dans la région médiane de la bande de roulement (2), dont l'axe longitudinal (7) de la section d'extrémité (6) de la pointe de crampon occupe un angle α de 0° à +/-7° par rapport à la direction axiale (aR), et la zone de crampons de base (10_{B}) partageant la bande de roulement en une moitié droite de bande de roulement (8) et en une moitié gauche de bande de roulement (9), **caractérisé en ce qu'au** moins 2 autres zones de crampons (10_{1, 2-n}) munies de crampons (4) sont agencées dans une moitié de bande de roulement (8, 9) en plus de la zone de crampons de base (10_{B}), dont les axes longitudinaux (7) des sections d'extrémité (6) des pointes de crampon occupent chacun un angle plus grand par rapport à la direction axiale (aR) plus la zone de crampons (10_{1, 2-n}) du crampon (4) est positionnée axialement à l'extérieur, et **en ce que** les axes longitudinaux (7) des sections d'extrémité (6) des pointes de crampon des crampons (4) positionnés dans ces autres zones de crampons (10₁, ₂₋ₙ) occupent des angles β, γ, δ dans une plage allant de +/-5° à +/-90° par rapport à la direction axiale (aR).

2. Pneumatique de véhicule selon la revendication 1, **caractérisé en ce que** tous les crampons (4) dans la bande de roulement présentent la même géométrie.

3. Pneumatique de véhicule selon la revendication 1 ou 2, **caractérisé en ce que**, dans une zone de crampons (10_{B}, _{1, 2-n}), tous les axes longitudinaux (7) des sections d'extrémité (6) des pointes de crampon occupent des angles α-δ identiques par rapport à la direction axiale (aR).

4. Pneumatique de véhicule selon l'une quelconque des revendications 1 à 3, **caractérisé en ce que** les au moins deux autres zones de crampons (10_{1, 2-n}) sont agencées dans chacune des deux moitiés de bande de roulement (8, 9) ; notamment en cas de profils de bande de roulement directionnels symétriques, tous les angles α-δ des axes longitudinaux (7) des sections d'extrémité (6) des pointes de crampon par rapport à la direction axiale (aR) étant positifs dans une moitié de bande de roulement (8, 9) et tous étant négatifs dans l'autre moitié de bande de roulement (8, 9).

5. Pneumatique de véhicule selon la revendication 4, **caractérisé en ce que** le nombre et l'agencement des zones de crampons (10_{1, 2-n}), ainsi que l'orientation et la taille des angles des axes longitudinaux (7) des sections d'extrémité (6) des pointes de crampon sont agencés dans la bande de roulement selon une symétrie miroir par rapport à la zone de crampons de base (10_{B}).

6. Pneumatique de véhicule selon les revendications 1 à 3, **caractérisé en ce que** les au moins deux autres zones de crampons (10_{1, 2-n}) sont agencées dans les deux moitiés de bande de roulement (8, 9) ; notamment en cas de profils de bande de roulement asymétriques, les angles des axes longitudinaux (7) des sections d'extrémité (6) des pointes de crampon par rapport à la direction axiale (aR) étant identiques dans une piste de crampons (5_{1, 2-n}), mais présentant toutefois des signes positifs et négatifs en alternance sur la circonférence d'une piste de crampons (5_{1, 2-n}).

7. Pneumatique de véhicule selon une ou plusieurs des revendications précédentes, **caractérisé en ce qu'**une moitié de bande de roulement (8, 9) comprend 3 à 15 autres pistes de crampons (5_{1, 2-n}), qui se situent dans des zones de crampons (10₁, ₂₋ₙ).

8. Pneumatique de véhicule selon une ou plusieurs des revendications précédentes, **caractérisé en ce que** la zone de crampons de base (10_{B}) comprend une ou deux pistes de crampons de base, qui sont agencées dans la région centrale (2) de la bande de roulement, et **en ce que** les angles des axes longitudinaux (7) des sections d'extrémité (6) des pointes de crampon sont approximativement identiques dans les deux pistes de crampons de base (5_{B}).

9. Pneumatique de véhicule selon une ou plusieurs des revendications précédentes, **caractérisé en ce que** la zone de crampons de base (10_{B}) comprend une ou deux pistes de crampons de base, qui sont agencées dans la région centrale de la bande de roulement (2), et **en ce que** les axes longitudinaux (7) des sections d'extrémité (6) des pointes de crampon des crampons des autres zones de crampons (10_{1, 2-n}) occupent par rapport à la direction axiale (aR) dans la région médiane de la bande de roulement (2) des angles dans une plage allant de +/-5° à +/-12° et dans la région d'épaulement (1a, 1b) dans une plage allant de +/-12° à +/-90° par rapport à la direction axiale (aR).

10. Pneumatique de véhicule selon une ou plusieurs des revendications précédentes, **caractérisé en ce que** 7 zones de crampons (10_{B}, _{1, 2-n}) sont agencées dans la bande de roulement, parmi lesquelles trois autres zones de crampons (10_{1, 2, 3}) sont agencées dans la moitié gauche de bande de roulement (9), trois autres zones de crampons (10_{1, 2, 3}) sont agencées dans la moitié droite de bande de roulement (8), et une zone de crampons de base (10_{B}) munie de deux pistes de crampons (5_{B}) est agencée dans la région centrale de la bande de roulement (2), et **en ce que** les axes longitudinaux (7) des sections d'extrémité (6) des pointes de crampon des crampons (4) occupent des angles observés de gauche à droite sur la bande de roulement dans les plages suivantes par rapport à la direction axiale (aR) : 30° à 90°, 12° à 30°, 5° à 12°, 0° à +/-7°, 0° à +/-7°, -5° à -12, -12° à -30°, -30° à -90° ou vice versa, les angles devenant plus grands plus le crampon est agencé axialement à l'extérieur.

11. Pneumatique de véhicule selon une ou plusieurs des revendications précédentes, **caractérisé en ce que** 7 zones de crampons (10_{B, 1, 2-n}) sont agencées dans la bande de roulement, parmi lesquelles trois autres zones de crampons (10₁, _{2, 3}) sont agencées dans la moitié gauche de bande de roulement (9), trois autres zones de crampons (10₋₁, ₋₂, ₋₃) sont agencées dans la moitié droite de bande de roulement (8), et une zone de crampons de base (10_{B}) munie d'une piste de crampons de base (5_{B}) est agencée dans la région centrale de la bande de roulement (2), et **en ce que** les axes longitudinaux (7) des sections d'extrémité (6) des pointes de crampon des crampons (4) occupent des angles observés de gauche à droite sur la bande de roulement dans les plages suivantes par rapport à la direction axiale (aR) : +45°, +15°, + 7°, 0°, -7°, -15°, -45° ou vice versa.

12. Pneumatique de véhicule selon une ou plusieurs des revendications 1 à 10 précédentes, **caractérisé en ce que** 7 zones de crampons (10_{B}, _{1, 2-n}) sont agencées dans la bande de roulement, parmi lesquelles trois autres zones de crampons (10_{1, 2, 3}) sont agencées dans la moitié gauche de bande de roulement (9), trois autres zones de crampons (10_{4, 5, 6}) sont agencées dans la moitié droite de bande de roulement (8), et la zone de crampons de base (10_{B}) munie d'une piste de crampons de base (5_{B}) est agencée dans la région centrale de la bande de roulement (2), et **en ce que** les axes longitudinaux (7) des sections d'extrémité (6) des pointes de crampon des crampons (4) occupent des angles observés de gauche à droite sur la bande de roulement dans les plages suivantes par rapport à la direction axiale : +/-45°, +/-15°, +/-7°, 0°, +/-7°, +/-15°, +/-45°, soit les signes des angles des axes longitudinaux (7) de crampons agencés successivement (4) étant en alternance les uns par rapport aux autres dans une, de préférence dans toutes les pistes de crampons (5₁₋₆),
soit dans une, de préférence dans toutes les zones de crampons (10₁₋₆) qui comprennent plus d'une piste de crampons (5₁₋₆), une piste de crampons (5₁₋₆) de cette zone de crampons (10₁₋₆) présentant exclusivement des signes positifs et une autre piste de crampons (5₁₋₆) de la même zone de crampons (10₁₋₆) présentant exclusivement des signes négatifs des angles des axes longitudinaux (7) des crampons (4).

13. Pneumatique de véhicule selon une ou plusieurs des revendications précédentes, **caractérisé en ce que**, dans un agencement d'un nombre pair de zones de crampons, duquel nombre la zone de crampons de base est exclue, la zone de crampons de base comprend deux pistes de base.

14. Pneumatique de véhicule selon une ou plusieurs des revendications 1 à 12 précédentes, **caractérisé en ce que**, dans un agencement d'un nombre impair de zones de crampons, duquel nombre la zone de crampons de base est exclue, la zone de crampons de base comprend une piste de base.
